# EUROPÄISCHE PATENTANMELDUNG

(11) **EP 1 825 984 A2**
(43) Veröffentlichungstag der Anmeldung: **29.08.2007**
(21) Anmeldenummer: 07001644.9
(22) Anmeldetag: 25.01.2007
(51) Int. Cl.: B29C 45/16, A47K 13/02

(54) **Verfahren zur Herstellung eines Formteils und ein nach diesem Verfahren hergestelltes Formteil**

(30) Priorität: 30.01.2006 DE 102006004476
(71) Anmelder: HAMBERGER INDUSTRIEWERKE GmbH, 83071 Stephanskirchen (DE)
(72) Erfinder: Hamberger Peter, 83071 Stephanskirchen (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist ein Verfahren zur Herstellung eines Formteils (6,8), insbesondere eines WC-Sitzes (2) oder eines WC-Deckels (4) mit einem Kern (10) und einer den Kern umgebenden Außenhülle (12), wobei die Außenhülle und der Kern sequenziell oder simultan in eine Spritzgießform eingespritzt werden und das Kernmaterial gegenüber dem Hüllmaterial eine geringere Enthalpie aufweist. Offenbart ist desweiteren ein nach diesem Verfahren hergestelltes Formteil.

## Beschreibung

Die Erfindung betrifft ein Verfahren zur Herstellung eines Formteils gemäß dem Oberbegriff des Patentanspruchs 1 und ein nach einem derartigen Verfahren hergestelltes Formteil nach dem Oberbegriff des Patentanspruchs 10.

Das erfindungsgemäße Verfahren kann prinzipiell zur Herstellung von Formteilen für unterschiedliche Anwendungen Verwendung finden. Das Hauptanwendungsgebiet des Verfahrens dürfte jedoch in der Herstellung von Formteilen für die Sanitärtechnik, beispielsweise von WC-Sitzen oder WC-Deckeln einer WC-Sitzanordnung liegen.

Bei derartigen Formteilen für die Sanitärtechnik handelt es sich in der Regel um relativ massive, solide Artikel, die einerseits eine hinreichende Festigkeit aufweisen und andererseits derart ausgestaltet sein müssen, dass sie dem Benutzer ein Gefühl der Hochwertigkeit vermitteln und eine ansprechende optische Gestaltung aufweisen. Diese Anforderungen setzen ein gewisses Eigengewicht der WC-Sitze und WC-Deckel voraus, das in der Regel durch entsprechende Materialwahl und dickwandige Ausgestaltung der Bauelemente erreicht wird. Aus diesem Grund werden hochwertige WC-Sitze und WC-Deckel meist aus granulatförmigen Duroplasten unter hohem Druck und Temperaturen von über 150°C im Pressverfahren hergestellt, so dass Formteile mit einer großen Dichte entstehen. Derartige Pressverfahren sind jedoch hinsichtlich der Materialaufbereitung und des vorrichtungstechnischen Aufwandes sehr aufwändig, so dass man bei geringeren Qualitätsanforderungen bestrebt ist, die WC-Sitzanordnung im Spritzgießverfahren herzustellen.

Ein derartiges Spritzgießverfahren zur Herstellung einer WC-Sitzanordnung ist beispielsweise aus der DE 197 30 330 C2 der Anmelderin bekannt. Bei diesem bekannten Verfahren wird zunächst ein Kern aus mit einem Thermoplast, beispielsweise Polypropylen (PP), als Bindemittel versetzten Holzfasern im Spritzgießverfahren hergestellt. In einem weiteren Arbeitsschritt wird der Kern in eine zweite Spritzgießform mit größerer Kavität eingelegt und durch Umspritzen mit einem Thermoplast umhüllt. Aufgrund der Holzfaserverstärkung hat der Kern auch bei hohen Entformungstemperaturen eine hinreichende Formbeständigkeit und kann nach einer kurzen Abkühlphase bei relativ hohen Temperaturen aus der ersten Spritzgieß-form entnommen und dem weiteren Verarbeitungsschritt, d.h. dem Umspritzen zugeführt werden. Nachteilig bei derartigen Spritzgießverfahren ist zum Einen, dass diese aufgrund der Vielzahl benötigter Verfahrensschritte und Vorrichtungen - Herstellen des Kerns in einer ersten Gießform, Einlegen des Kerns in eine zweite Gießform und Umspritzen des Kerns - bei hohen Zykluszeiten vorrichtungstechnisch aufwändig sind. Weiterhin nachteilig ist, dass zum Plastifizieren des Kernmaterials eine große Wärmemenge erforderlich ist, die beim Abkühlen des Kernmaterials über die Werkzeugform abgeführt werden muss, so dass insbesondere bei dickwandigen Formteilen die Zykluszeiten weiter erhöht sind.

Demgegenüber liegt der Erfindung die Aufgabe zugrunde, ein Formteil und ein Verfahren zu dessen Herstellung zu schaffen, bei denen gegenüber herkömmlichen Lösungen eine verringerte Zykluszeit bei minimalem vorrichtungstechnischem Aufwand ermöglicht ist.

Diese Aufgabe wird hinsichtlich des Verfahrens zur Herstellung eines Formteils durch die Merkmale des Patentanspruchs 1 und hinsichtlich des nach einem derartigen Verfahren hergestellten Formteils durch die Merkmalskombination des Patentanspruchs 10 gelöst.

Bei einem erfindungsgemäßen Verfahren zur Herstellung eines Formteils, insbesondere eines WC-Sitzes oder eines WC-Deckels mit einem Kern und einer den Kern umgebenden Außenhülle, wird die Außenhülle und der Kern sequenziell oder simultan in eine Spritzgießform eingespritzt, wobei das Kernmaterial gegenüber dem Hüllmaterial eine geringere Enthalpie aufweist. Die erfindungsgemäße Lösung ist gegenüber dem Stand der Technik gemäß der DE 197 30 330 C2 wesentlich vereinfacht, da lediglich eine Spritzgießform zur Formteilherstellung erforderlich ist. Weiterhin sind die zur Formteilherstellung notwendigen Verfahrensschritte aufgrund des sequenziell oder simultan in die Spritzgießform eingespritzten Hüll- und Kernmaterials verringert und dadurch kürzere Zykluszeiten möglich. Da erfindungsgemäß ein Kernmaterial mit gegenüber dem Hüllmaterial geringerer Enthalpie verwendet wird, ist der erforderliche Wärmeeintrag zum Plastifizieren bzw. die abzuführende Wärmemenge beim Abkühlen des Formteils verringert, so dass der Entformungsprozess nach kurzer Abkühlzeit erfolgen kann und die Zykluszeiten weiter verringert sind. Dies ermöglicht die Herstellung von hochwertigen, dickwandigen Bauteilen, da ein geringerer Energieeintrag und kürzere Zykluszeiten zur Formteilherstellung notwendig sind.

Als besonders vorteilhaft hat es sich erwiesen, wenn das Hüllmaterial und das Kernmaterial über eine von zumindest zwei Spritzgießeinheiten versorgte Sandwichplatte in die Spritzgießform eingebracht werden. Vorzugsweise wird hierbei das Hüllmaterial geringfügig zeitversetzt vor dem Kernmaterial in die Spritzgießform eingespritzt, so dass sich das Hüllmaterial an die Innenwandung der Werkzeugkavität anlegen kann und eine geschlossene Außenhülle des Formteils erzeugt.

Gemäß einem besonders bevorzugten Ausführungsbeispiel besteht der Kern aus vergleichsweise niederwertigem Material, wobei die Außenhülle eine hochwertige Außenfläche ausbildet. Mit anderen Worten, für den Kernwerkstoff kann ein kostengünstiges Material ohne hohe Qualitätsanforderungen an die Oberfläche Verwendung finden, da die erforderliche Oberflächenqualität des Formteils durch die Umhüllung des Kerns gewährleistet wird. Dadurch können Material, Raumgewicht und Dicke des Kerns gezielt an die geforderten mechanischen Eigenschaften, das gewünschte Gesamtgewicht und den Kostenrahmen des Formteils angepasst werden.

Bei einem besonders bevorzugten Ausführungsbeispiel besteht der Kern aus einer Duroplast-Thermoplastmischung, beispielsweise einer Urea-Polypropylenmischung. Da das Thermoplastmaterial beim Aufschmelzen und Erstarren eine große Wärmemenge aufnimmt bzw. abgibt, ist die Enthalpie des Kernmaterials im Wesentlichen von der Menge des verwendeten Thermoplastmaterials abhängig. Durch die Zugabe von Duroplastmaterial wird der Anteil des Thermo-plasts im Kernmaterial und dadurch die benötigte bzw. abzuführende Energiemenge verringert, so dass die Zyklus-zeiten bei der Formteilherstellung erheblich verkürzt sind. Die Formteilkosten können weiterhin durch die Verwendung von Recyclat als Duroplastkomponente im Kernmaterial verringert werden. Beispielsweise findet als Duroplastkomponente ein Urea-Abfallprodukt aus Pressgrat oder zerkleinerten Ausschussteilen von Urea-Pressteilen Verwendung. Aufgrund des bereits vollständig ausgehärteten Recyclats treten beim Spritzgießen keine ungewünschten Reaktionen mit dem Thermoplast der Außenhülle auf.

Gemäß einer alternativen Variante der Erfindung besteht der Kern aus einer Holzpartikel-Thermoplastmischung, beispielsweise einer Holzpartikel-Polypropylenmischung. Aufgrund der Zugabe von Holzpartikeln in die Kernmaterialmischung verringern sich die Thermoplast-anteile und dadurch die benötigte bzw. abzuführende Energiemenge sowie die Zykluszeiten bei der Formteil-herstellung.

Als besonders vorteilhaft hat es sich erwiesen, wenn die Außenhülle aus einem Thermoplast, insbesondere aus Polypropylen ist. Derartige Kunststoffe sind kosten-günstig und besitzen ausgezeichnete mechanische und chemische Eigenschaften, so dass die erfindungsgemäßen Formteile weitgehend verschleißfest und dadurch überaus strapazierfähig sind. Das Thermoplastmaterial der Umhüllung kann zur farblichen Gestaltung des Formteils mit Zusatzstoffen eingefärbt sein.

Die Außenhülle hat vorzugsweise eine Schichtdicke im Bereich von etwa 0,5 bis 3 mm, beispielsweise von 1,5 mm. Durch eine Schichtdicke in diesem Bereich wird eine hochwertige, kratzfeste Formteiloberfläche bei gleichzeitig gegenüber einem Massivbauteil verringertem Materialbedarf erreicht. Dies führt zu einer erheblichen Kostenoptimierung in der Formteilherstellung.

Der Kern ist bei einem besonders bevorzugten Ausführungsbeispiel der Erfindung vollständig in der Außenhülle eingebettet, so dass das Formteil eine geschlossene, hochwertige Oberfläche aufweist, die auch höchsten Ansprüchen an die Ästhetik genügt.

Sonstige vorteilhafte Weiterbildungen der Erfindung sind Gegenstand der weiteren Unteransprüche.

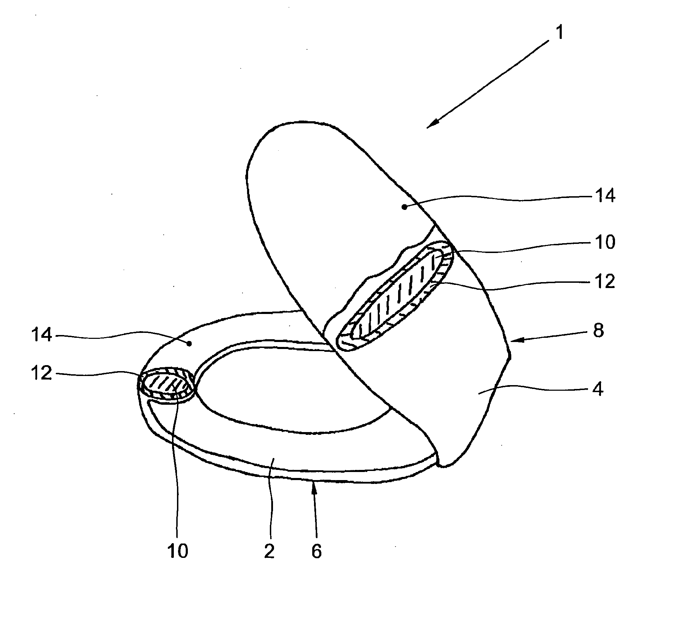

Nachstehend wird die Erfindung anhand eines bevorzugten Ausführungsbeispiels näher erläutert. Die einzige Figur zeigt eine teilgeschnittene Darstellung eines als WC-Sitz und eines als WC-Deckel ausgebildeten erfindungsgemäßen Formteils einer WC-Sitzanordnung.

Die Figur zeigt eine teilgeschnittene Darstellung einer WC-Sitzanordnung 1 mit einem als WC-Sitz 2 und einem als WC-Deckel 4 ausgebildeten erfindungsgemäßen Formteil 6 bzw. 8. Die WC-Sitzanordnung 1 wird über eine nicht dargestellte Gelenkeinrichtung, über die auch der WC-Deckel 4 verschwenkbar am WC-Sitz 2 angelenkt ist, an einem WC-Becken (nicht dargestellt) befestigt.

Wie aus den Schnittdarstellungen des WC-Sitzes 2 und des WC-Deckels 4 zu entnehmen ist, bestehen diese aus einem Kern 10, der von einer Außenhülle 12 umgeben ist, die eine hochwertige, geschlossene Außenfläche 14 ausbildet. Dadurch kann für den Kern 10 ein kostengünstiges, vergleichsweise minderwertiges Material ohne hohe Qualitätsanforderungen an die Oberfläche Verwendung finden. Die erforderliche Oberflächenqualität und Verschleißfestigkeit des WC-Sitzes 2 und des WC-Deckels 4 ist durch die Außenhülle 12 des Kerns 10 gewährleistet. Material, Raumgewicht und Dicke des Kerns 10 können gezielt an die geforderten mechanischen Eigenschaften und das gewünschte Gesamtgewicht der WC-Sitzanordnung 1 angepasst werden. Dadurch wird ein WC-Sitz 2 und ein WC-Deckel 4 mit hoher Steifigkeit durch den Kern 10 und hervorragender Oberflächenhärte und Oberflächengüte durch die Außenhülle 12 erreicht, der dem Benutzer ein Gefühl der Hochwertigkeit vermittelt und eine ansprechende Oberfläche mit hoher Verschleißfestigkeit aufweist. Erfindungsgemäß wurde zur Herstellung des WC-Sitzes 2 bzw. des WC-Deckels 4 die Außenhülle 12 und der Kern 10 sequenziell oder simultan in eine Kavität einer Spritzgießform (nicht dargestellt) eingespritzt, wobei das Kernmaterial gegenüber dem Hüllmaterial eine geringere Enthalpie aufweist. Aufgrund der sequenziellen oder simultanen Formteilherstellung ist lediglich eine Spritzgießform zur Formteilherstellung erforderlich, so dass der vorrichtungstechnische Aufwand gering ist. Weiterhin sind die notwendigen Verfahrensschritte aufgrund des sequenziell oder simultan in die Spritzgießform eingespritzten Hüll- und Kernmaterials und dadurch die Zykluszeiten stark verringert. Da erfindungsgemäß ein Kernmaterial mit gegenüber der Außenhülle 12 verringerter Enthalpie verwendet wird, ist der zum Plastifizieren bzw. Abkühlen des Kernmaterials erforderliche Wärmeeintrag bzw. die abzuführende Wärmemenge relativ gering, so dass die benötigte Energiemenge sowie die Zykluszeiten verringert sind. Bei dem gezeigten Ausführungsbeispiel besteht der Kern 10 aus einer Urea-Polypropylenmischung, d.h. einer Duroplast-Thermoplastmischung. Da das Thermoplastmaterial beim Aufschmelzen und Erstarren eine große Wärmemenge aufnimmt bzw. abgibt ist die Enthalpie des Kernmaterials im Wesentlichen von der Menge des Polypropylens abhängig. Durch die Zugabe des Duroplastmaterials, d.h. von Urea, wird der Anteil des Polypropylens im Kernmaterial und dadurch die benötigte bzw. abzuführende Energiemenge verringert, so dass die Zykluszeiten bei der Formteilherstellung verkürzt sind. Für das als Duroplastkomponente des Kernmaterials verwendete Urea kann beispielsweise ein Abfallprodukt aus Pressgrat oder zerkleinerten Ausschussteilen von Urea-Pressteilen Verwendung finden. Durch Recyclat als Duroplastkomponente können die Formteilkosten weiter verringert werden. Bei der gezeigten WC-Sitzanordnung 1 findet für die Außenhülle 12 des WC-Sitzes 2 und des WC-Deckels 4 Polypropylen Verwendung. Dieses ist relativ kostengünstig und hat ausgezeichnete mechanische und chemische Eigenschaften, so dass die Formteiloberfläche 14 eine hohe Verschleißfestigkeit aufweist und dadurch überaus strapazierfähig ist. Das Thermoplastmaterial der Außenhülle 12 ist zur farblichen Gestaltung der WC-Sitzanordnung 1 mit Farbpigmenten eingefärbt. Die Polypropylenbeschichtung 12 hat eine Schichtdicke von etwa 1,5 mm, so dass gegenüber einem Massivbauteil aus Duroplast ein wesentlich verringerter Materialbedarf und dadurch eine erhebliche Kostenreduzierung der WC-Sitzanordnung 1 erreicht wird. Der Kern 10 ist vollständig in die Außenhülle 12 eingebettet, so dass der WC-Sitz 2 und der WC-Deckel 4 eine geschlossene, hochwertige Außenfläche 14 aufweist.

Die Herstellung der Formteile 6, 8, d.h. des WC-Sitzes 2 und des WC-Deckels 4 erfolgt in einem Sandwichspritzgießvorgang. Hierzu wird eine 2-Komponentenspritzgießmaschine mit zwei Spritzeinheiten (Plastifiziereinheiten) verwendet, wobei über die erste Spritzgieß-einheit das Hüllmaterial und über die zweite Spritzgieß-einheit das Kernmaterial in eine Spritzgießform eingebracht wird (nicht dargestellt). Zur Formteil-herstellung wird in einem ersten Arbeitsschritt die Spritzgießform geschlossen und ein Teil der Hüllmaterial-schmelze über die erste Spritzeinheit und eine von den beiden Spritzgießeinheiten versorgte Sandwichplatte (nicht dargestellt) in die Werkzeugkavität eingespritzt. Die Sandwichplatte dient hierbei zur Steuerung der Schmelzeströme beim Eintritt in die Kavität der Spritzgießform. Anschließend wird der Strömungsweg der ersten Spritzeinheit, beispielsweise mittels einer Hülse oder einem Drehschieber blockiert und über die zweite Spritz-einheit die Kernmaterialschmelze in die Werkzeugkavität eingebracht. Das nachströmende Kernmaterial drückt hierbei die Hüllmaterialschmelze von innen an die Werkzeugkavität, so dass sich das Hüllmaterial hautartig an die gesamte Innenfläche der Werkzeugkavität anlegt. Abschließend wird über den Drehschieber bzw. die Hülse der Materialfluss der Kernmaterial-Spritzgießeinheit gesperrt und der Strömungsweg der ersten Spritzgieß-einheit nochmals aufgesteuert und weiteres Hüllmaterial in den Angusskanal (Heißkanal) gedrückt. Dadurch wird der Angussbereich des Formteils 6, 8 gegenüber dem Kern 10 mit Hüllmaterial geschlossen. Aufgrund dieser Nachspritz-operation wird das Formteil 6, 8 vollständig in die Außenhülle 12 eingebettet und der im Angusskanal befindliche Rest des Kernmaterials durch Hüllmaterial ersetzt, so dass ein Vermischen von Hüll- und Kernmaterial und dadurch eine partielle Verschmutzung der Formteiloberfläche 14 bei der Herstellung nachfolgender Formteile 6, 8 vermieden wird. Nach dem Abkühlen werden die Formhälften der Spritzgießform geöffnet und die Formteile 6, 8, d.h. der WC-Sitz 2 oder der WC-Deckel 4 über ein Handhabungsgerät oder von Hand entnommen.

Das erfindungsgemäße Verfahren ist nicht auf die beschriebene Duroplastkomponente Urea im Kernmaterial beschränkt, vielmehr kann jedes aus dem Stand der Technik bekannte Duroplastmaterial als Duroplastkomponente des Kernmaterials Verwendung finden. Erfindungswesentlich ist, dass die Außenhülle 12 und der Kern 10 sequenziell oder simultan in eine Spritzgießform eingespritzt werden und das Kernmaterial gegenüber dem Hüllmaterial eine geringere Enthalpie aufweist, so dass die Zykluszeiten und der vorrichtungstechnische Aufwand bei der Formteilherstellung erheblich verringert sind.

Offenbart ist ein Verfahren zur Herstellung eines Formteils 6, 8, insbesondere eines WC-Sitzes 2 oder eines WC-Deckels 4 mit einem Kern 10 und einer den Kern 10 umgebenden Außenhülle 12, wobei die Außenhülle 12 und der Kern 10 sequenziell oder simultan in eine Spritzgießform eingespritzt werden und das Kernmaterial gegenüber dem Hüllmaterial eine geringere Enthalpie aufweist. Offenbart ist desweiteren ein nach diesem Verfahren hergestelltes Formteil 6, 8.

### Bezugszeichenliste

- 1: WC-Sitzanordnung
- 2: WC-Sitz
- 4: WC-Deckel
- 6: Formteil
- 8: Formteil
- 10: Kern
- 12: Außenhülle
- 14: Außenfläche

## Patentansprüche

1. Verfahren zur Herstellung eines Formteils (6, 8), insbesondere eines WC-Sitzes (2) oder eines WC-Deckels (4) mit einem Kern (10) und einer den Kern (10) umgebenden Außenhülle (12), **dadurch gekennzeichnet, dass** die Außenhülle (12) und der Kern (10) sequenziell oder simultan in eine Spritzgießform eingespritzt werden, wobei das Kernmaterial gegenüber dem Hüllmaterial eine geringere Enthalpie aufweist.

2. Verfahren nach Anspruch 1, wobei das Hüllmaterial und das Kernmaterial über eine zumindest zwei Spritzgießeinheiten zugeordnete Sandwichplatte in die Spritzgießform eingebracht werden.

3. Verfahren nach Anspruch 1 oder 2, wobei das Hüllmaterial vor dem Kernmaterial in die Spritzgießform eingebracht wird.

4. Verfahren nach einem der vorhergehenden Ansprüche, wobei der Kern (10) aus vergleichsweise niederwertigem Material ist und die Außenhülle (12) eine hochwertige Außenfläche (14) ausbildet.

5. Verfahren nach einem der vorhergehenden Ansprüche, wobei der Kern (10) eine Duroplast-Thermoplastmischung, vorzugsweise eine Urea-Polypropylen enthaltende Mischung aufweist.

6. Verfahren nach einem der Ansprüche 1 bis 4, wobei der Kern (10) eine Holzpartikel-Thermoplastmischung, insbesondere eine Holzpartikel-Polypropylenmischung aufweist.

7. Verfahren nach einem der vorhergehenden Ansprüche, wobei die Außenhülle (12) aus einem Thermoplast, insbesondere aus Polypropylen ist.

8. Verfahren nach einem der vorhergehenden Ansprüche, wobei die Außenhülle (12) eine Schichtdicke im Bereich von etwa 0,5 bis 3 mm, vorzugsweise von 1,5 mm aufweist.

9. Verfahren nach einem der vorhergehenden Ansprüche, wobei der Kern (10) vollständig in der Außenhülle (12) eingebettet ist.

10. Formteil (6, 8) hergestellt nach einem Verfahren gemäß einem der vorhergehenden Ansprüche, mit einem Kern (10) der von einer Außenhülle (12) umgeben ist, wobei das Kernmaterial gegenüber dem Hüllmaterial eine geringere Enthalpie aufweist.
